# EUROPEAN PATENT APPLICATION

(11) **EP 3 454 232 A1**
(43) Date of publication of application: **13.03.2019**
(21) Application number: 18193862.2
(22) Date of filing: 11.09.2018
(51) Int. Cl.: G06F 17/30, G01C 21/34

(54) **COMPUTER IMPLEMENTED TECHNOLOGIES CONFIGURED TO ENABLE EFFICIENT PROCESSING OF QUERIES IN A TRANSPORTATION DATA SYSTEM, INCLUDING USE OF PARTITIONING BASED ON TRIP ATTRIBUTES**

(30) Priority: 11.09.2017 AU 2017903683; 11.09.2017 AU 2017903684
(71) Applicant: SilverRail Australia Pty Ltd, 4000 Brisbane, Queensland (AU)
(72) Inventor: Mehta, Maithili, Brisbane, Queensland 4000 (AU)
(74) Representative: Smith, Jeremy Robert

(57) **Abstract**

The present invention relates to computer implemented technologies configured to enable efficient processing of queries in a transportation data system, in some embodiments using partitioning based on trip attributes, and in other embodiments by independent pre-processing of trip pattern data. In one embodiment, a physical transportation network is partitioned, for example based on geographical regions (and/or further partitioning schema) as a configurational process. Trips defined in trip data are each assigned one or more attribute markers responsive to that partitioning. At query runtime, a process is performed thereby to determine a set of attribute markers for a given query (which, for examples described herein, is a query including data that defines an origin location and a destination location). A journey construction module is then executed to generate journeys, which represent potential practical real-world journeys from the origin location to the destination location using only trips satisfying the determined set of attribute markers. This reduces the problem space for the query, thereby resulting in delivery of results having high probability of representing optimal journeys in shorter times than available via conventional query processing methodologies, with high processing efficiency.

## Description

### FIELD OF THE INVENTION

The present invention relates to computer implemented technologies configured to enable efficient processing of queries in a transportation data system, in some embodiments using partitioning based on trip attributes, and in other embodiments by independent pre-processing of trip pattern data. Some embodiments of the invention have been particularly developed to reduce processing complexity for queries, for example by reducing a problem space via pre-designation of trip attributes. While some embodiments will be described herein with particular reference to that application, it will be appreciated that the invention is not limited to such a field of use, and is applicable in broader contexts.

### BACKGROUND

Any discussion of the background art throughout the specification should in no way be considered as an admission that such art is widely known or forms part of common general knowledge in the field.

In a transportation network, there are often a significant number of options by which a traveller can travel from a given Point A to a given Point B. The number of options can increase significantly based on factors such as the complexity of available transportation networks, and willingness to move between and/or across established routes. However, with the degree of query traffic experienced by transportation ticketing/planning systems (and user expectations), there are limits on the complexity of analysis.

### SUMMARY OF THE INVENTION

It is an object of at least some embodiments of the present invention to overcome or ameliorate at least one of the disadvantages of the prior art, or to provide a useful alternative.

One embodiment provides a system configured to enable efficient processing of queries received from a user, the computer system including:
an input module configured to receive transportation data, the transportation data including data representative of:
a plurality of trips T₁ to Tₙ;
for each trip, a plurality of transit locations Tᵢ(L₀, L₁, ... Lₙ) ; and
for each transit location, timing data representative of a scheduled transit event at that transit location during the trip;
an attribute designation module, wherein the attribute designation module is configured to assign to each trip one or more attribute markers;
wherein the input module is configured to store the received transportation data in a local searchable repository in accordance with a predefined protocol;
a search space simplification module that is configured to:
   (i) receive data representative of a journey query, including data defining an origin location, a destination location, and a time window;
   (ii) determine one or more attribute markers to be applied for the journey query;
   (iii) designate a reduced set of trips for the purpose of the query, being trips that include the one or more attribute markers;
a journey construction module that is configured to construct a plurality of journeys based on a set of journey construction rules, wherein the journey processing module is operated to construct one or more journeys in response to the journey query, wherein operating the journey processing module thereby to construct one or more journeys in response to the journey query includes constructing journeys exclusively from trips in the reduced set of trips designated by the search space simplification module.

One embodiment provides a system wherein
the plurality of trips relate to transportation network covering a defined geographical area;
the geographical area is split into a plurality of geographical partitions;
a respective attribute marker is defined for each of the geographical partitions; and
the attribute designation module is configured to assign to each trip one or more attribute markers based on one or more geographical partitions serviced by the trip.

One embodiment provides a system wherein determining one or more attribute markers to be applied to the journey query includes:
determining a geographical partition to which the origin location belongs;
identifying an attribute marker defined for the determined geographical partition to which the origin location belongs; and
determining that the attribute marker defined for the determined geographical partition to which the origin location belongs is to be applied to the journey query.

One embodiment provides a system wherein determining one or more attribute markers to be applied to the journey query includes:
determining a geographical partition to which the origin location belongs;
identifying an attribute marker defined for the determined geographical partition to which the origin location belongs;
determining that the attribute marker defined for the determined geographical partition to which the origin location belongs is to be applied to the journey query;
determining a geographical partition to which the destination location belongs;
identifying an attribute marker defined for the determined geographical partition to which the destination location belongs; and
determining that the attribute marker defined for the determined geographical partition to which the destination location belongs is to be applied to the journey query.

One embodiment provides a system wherein the attribute designation module is configured to apply all geographical attribute markers to a set of trips that service a plurality of the geographical partitions.

One embodiment provides a system wherein the attribute designation module is configured to apply a trunk attribute marker to a set of trips that service a plurality of the geographical partitions; and wherein determining one or more attribute markers to be applied to the journey query includes:
determining that the trunk attribute marker defined is to be applied to the journey query.

One embodiment provides a system wherein the journey construction rules configure the journey construction module to construct one or more journeys from the origin location to the destination location using only trips having at least one of: the attribute marker defined for the determined geographical partition to which the origin location belongs; the attribute marker defined for the determined geographical partition to which the destination location belongs; and the trunk attribute marker.

One embodiment provides a system wherein the journey construction module applies Dijkstra's algorithm.

One embodiment provides a system wherein the journey construction module constructs the one or more journeys via performing a branching journey construction process that constructs plural branching journeys from each trip that includes the origin.

One embodiment provides a system wherein the branching journey construction process includes one or more termination rules, wherein a termination rule causes termination of a journey prior to that journey reaching the destination location.

One embodiment provides a system wherein the one or more termination rules include rules based on any one or more of the following:
- A maximum change count;
- A transit event falling outside of a defined time window; and
- Identification that a threshold number of completed journeys have been identified.

One embodiment provides a system wherein the journey construction module constructs the one or more journeys via performing a branching journey construction process that constructs plural branching journeys from each trip that includes the origin location.

One embodiment provides a system wherein the branching journey construction process increments a change count each time the journey splits to a new journey branch by transiting between one trip and another trip at a given transit location.

One embodiment provides a system wherein, in the case that for a given journey branch the change count exceeds a predefined maximum value, that journey branch is terminated and discarded.

One embodiment provides a system wherein, in the case that a given journey branch arrives at the destination location, that journey branch added to a result set.

One embodiment provides a system wherein the result set is populated with a plurality of journey data sets based on respective journey branches, wherein the journey data sets are configured to be sorted based on one or more attributes.

One embodiment provides a system wherein the one or more attributes include any one or more of: journey duration, departure time, arrival time, and change count.

One embodiment provides a system wherein the journey construction rules configure the journey construction module to:
identify one or more trips having a transit location at the origin location within the time window;
for each given trip having a transit location at the origin location within the time window, executing a process including:
   (i) defining a new journey data set commencing at the origin location, the new journey having a change count of zero;
   (ii) defining that trip as a current trip;
   (iii) following the current trip to a next transit location;
   (iv) at the next transit location, identifying one or more trips departing the next transit location following arrival of the current trip based on the journey construction rules;
   (v) for each of the identified one or more trips departing the next transit location following arrival of the current trip based on the journey construction rules, defining a new journey data set having a trip count incremented by one;
   (v) for each new journey data set, defining its respective identified trip departing the next transit location as the current trip, and repeating (iii) to (v) thereby to iteratively define expanding journey branches;
in the case that a journey data set reaches a maximum change count without an arrival at the destination location, discard that journey data set;
in the case that a journey data set includes an arrival at the destination location without reaching the maximum change count, define that journey data set as a candidate query result.

One embodiment provides a computer system configured to enable efficient processing of queries received from a user, the computer system including:
an input subsystem configured to receive transportation data, the transportation data including data representative of:
   a plurality of trips T₁ to Tₙ;
   for each trip, a plurality of transit locations Tᵢ(L₀, L₁, ... Lₙ) ; and
   for each transit location, timing data representative of a scheduled transit event at that transit location during the trip;
wherein the input subsystem is configured to store the received transportation data in a local searchable repository in accordance with a predefined protocol;
a data pre-processing system configured to:
   perform time-independent analysis of the transportation data, thereby to define a set of transit location sequence records SR₁ to SRₘ, wherein each transit location sequence record associated with data representative of a sequence of transit locations derived from a given one of the trips in the set T₁ to Tₙ, or a combined trip constructed from a combination of a plurality of the trips in the set T₁ to Tₙ, wherein
   each transit location sequence records is associated with a respective sequence of transit locations SRⱼ(L₀, L₁, ... Lₙ);
   perform a matching process thereby to identify a plurality of sets of transit location sequence records having matching sequences of transit locations;
   define each identified set of transit location sequence records having matching sequences of transit locations as a trip stop pattern; and store data representative of the trip stop patterns in the searchable repository, wherein each trip stop pattern is associated with data representative of a set of trips and/or combined trips on which each of its constituent transit location sequence records are based.

One embodiment provides a computer system including a query processing subsystem, wherein the query processing subsystem is configured to:
receive a query representative of an origin location Oᵢ and a destination location Dⱼ;
query the searchable repository thereby to identify one or more trip stop patterns including transit locations corresponding to origin location Oᵢ and destination location Dⱼ;
identify, for each of the identified one or more trip stop patterns, the associated set of trips and/or combined trips on which each of its constituent transit location sequence records are based; and
deliver a result set based on at least a subset of the identified set of trips and/or combined trips.

One embodiment provides a computer system wherein delivering a result set based on at least a subset of the identified set of trips and/or combined trips includes:
for each trip and/or combined trip in the subset: identifying one or more trip parameters;
sorting and/or filtering the results based on the identified one or more trip parameters; and
delivering a result set based on the sorting and/or filtering.

One embodiment provides a computer system wherein the one or more trip parameters include: the timing data for Oᵢ.

One embodiment provides a computer system wherein the one or more trip parameters include: the timing data for Dⱼ.

One embodiment provides a computer system wherein the one or more trip parameters include: based on the timing data for Oᵢ and the timing data for Dⱼ, a transit time between origin location Oᵢ and destination location Dⱼ.

One embodiment provides a computer system wherein the one or more trip parameters include: a fare value associated with transit between origin location Oᵢ and destination location Dⱼ.

One embodiment provides a computer system wherein the transportation data includes, for each trip, fare rules associated with that trip, and wherein the fare value associated with transit between origin location Oᵢ and destination location Dⱼ is derived from the fare rules.

One embodiment provides a computer system wherein the one or more trip parameters include: an aesthetic-related rating associated with the trip.

One embodiment provides a computer system wherein the one or more trip parameters include, for each combined trip: data representative of number transfers required to complete the combined trip between origin location Oᵢ and destination location Dⱼ.

One embodiment provides a computer system wherein the data representative of number transfers required to complete the combined trip between origin location Oᵢ and destination location Dⱼ includes a transfer duration for the or each transfer.

One embodiment provides a computer system wherein the data representative of number transfers required to complete the combined trip between origin location Oᵢ and destination location Dⱼ includes a number of transfers.

A system according to any preceding claim wherein the received transportation data includes GTFS data.

One embodiment provides a computer system wherein each combined trip constructed from a combination of a plurality of the trips in the set T₁ to Tₙ is constructed from a predefined maximum number of trips.

One embodiment provides a computer system wherein the maximum number of trips is 3.

One embodiment provides a computer program product for performing a method as described herein.

One embodiment provides a non-transitive carrier medium for carrying computer executable code that, when executed on a processor, causes the processor to perform a method as described herein.

One embodiment provides a system configured for performing a method as described herein.

Reference throughout this specification to "one embodiment", "some embodiments" or "an embodiment" means that a particular feature, structure or characteristic described in connection with the embodiment is included in at least one embodiment of the present invention. Thus, appearances of the phrases "in one embodiment", "in some embodiments" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

As used herein, the term "exemplary" is used in the sense of providing examples, as opposed to indicating quality. That is, an "exemplary embodiment" is an embodiment provided as an example, as opposed to necessarily being an embodiment of exemplary quality.

### BRIEF DESCRIPTION OF THE DRAWINGS

Embodiments of the invention will now be described, by way of example only, with reference to the accompanying drawings in which:
FIG. 1 schematically illustrates a framework according to one embodiment.
FIG. 2A illustrates a method according to one embodiment.
FIG. 2B illustrates a method according to one embodiment.
FIG. 2C illustrates a method according to one embodiment.

### DETAILED DESCRIPTION

In a transportation network, there are often a significant number of options by which a traveller can travel from a given Point A to a given Point B. The number of options can increase significantly based on factors such as the complexity of available transportation networks, and willingness to move between and/or across established routes. However, with the degree of query traffic experienced by transportation ticketing/planning systems (and user expectations), there are limits on the complexity of analysis that is able to be performed (for example based on acceptable query response times). The present invention relates to computer implemented technologies configured to enable efficient processing of queries in a transportation data system, for example by pre-processing data thereby to reduce a data set over which a particular query is executed, thereby to enable identification of a potentially larger relevant result set in a processing-efficient manner. Embodiments of the invention have been particularly developed to implement time-independent pre-processing of trip pattern data, thereby reduce processing overheads for queries, whilst enabling rich filtering/sorting functionalities. While some embodiments will be described herein with particular reference to that application, it will be appreciated that the invention is not limited to such a field of use, and is applicable in broader contexts.

### Example Framework

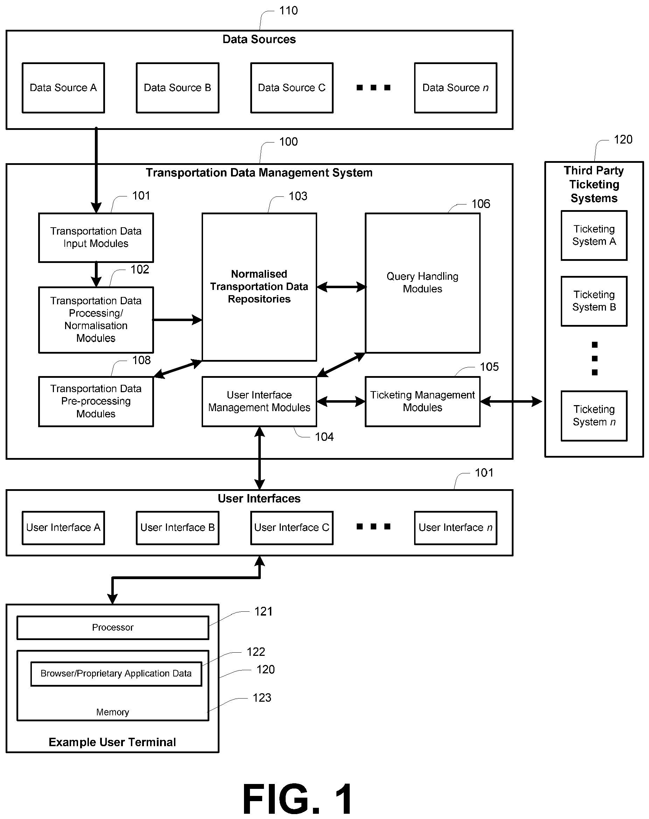

FIG. 1 illustrates an example framework according to an embodiment. This framework is provided as an example only, thereby to provide reference to technologies and methodologies described herein. It should be appreciated that the technologies and methodologies described herein are able to be implemented via the framework of FIG. 1, or via a range of alternate frameworks (as will be known to persons skilled in the art). In that regard, the framework of FIG. 1 seeks to illustrate key functional components that are relevant to provision of technology described herein.

FIG. 1 illustrates a transportation data management system 100. This system is defined by a single server device, or by multiple (optionally distributed) computing devices which collectively provide the functionality of system 100. For example, in one implementation, system 100 is defined by a networked computer system including web servers, database systems, processing hubs, and so on.

System 100 includes transportation data input modules 101, which are configured to enable input of data from a plurality of data sources 110. This may include pulling data from one or more of sources 110, and/or receiving push data delivered by one or more of sources 110. Modules 101 are configured based on the particular data source (or sources) with which they communicate. FIG. 1 illustrates example data sources Data Source A to Data Source n. These data sources may provide data including, but not limited to, the following:
- One or more sources of transportation scheduling data, for example data defined in accordance with General Transit Feed Specification (GTFS). Alternate data formats may also be used, for example TransXChange and the like. Regardless of the data format, transportation scheduling data provides, in a known format, data concerning scheduled trips (for example with transit locations, times, and so on).
- One or more sources of transportation fares data. For example, this provides data representative of monetary fares for travel between a given origin and destination, optionally associated with particular trip routes, times/dates, and so on.
- One or more sources of transportation fare availability data, which is for example representative of the availability of a fare for a defined trip between an origin and destination at a specified time/date.
- One or more sources of transportation rules data, for example data representative of rules associated with given fares (for instance whether they allow for over ticketing and so on).
- Map data - provides characteristics such as aesthetics, terrain, etc

It will be appreciated that in some cases a single data source provided multiple forms of data (for example where scheduling and fares data is provided via GTFS).

Transportation data processing/normalisation modules 102 are configured to process data received via input modules 101, thereby to enable storage of transportation data in a normalised format in one or more normalised transportation data repositories 103. For example, this may include combining of defined date from multiple linked CSV files defined based on GTFS into a flattened structure that is configured to enable efficient querying (for example based on known forms of queries, such as pre-processing queries, that are to be performed). In some embodiments the processing/normalisation performed by modules 102 generates multiple data repositories/tables which contain similar data structured based on differing data formats (for example based on data requirements for specific pre-processing queries), thereby to increase efficiency.

Transportation data pre-processing modules 108 are configured to execute computer data processing functions in respect of date in repositories 103, thereby to enhance that data in a manner that allows for increased efficiency in downstream query processing. For example, pre-processing is performed thereby to limit problem size for a known category of user query, for example a query based upon an origin and destination, thereby to reduce a set of trips of high relevance to that query (and exclude data that is known not to be useful in terms of providing relevant query results).

User interface management module 104 enable interaction between system 101 and a plurality of user interfaces 150 which execute wholly or partially at client terminals, for example an example user terminal 120. By way of example, user terminal 120 is a computing device including a microprocessor 121 that is configured to execute computer executable code 122 (software instructions) maintained on a memory module, thereby to allow rendering and execution of a user interface on a display device of the terminal. In the provided example, code 122 includes either or both of: (i) web browser code, which allows user interface data to be downloaded from a web server for execution via a web browser app, and/or proprietary application code, in which case code for enabling execution and rendering of user interface components is maintained locally in memory 123.

User interface management modules 104 are configured to enable receipt of data representative of a query submitted by a user of a user interface, and cause that query to be executed via query handling modules 106. Query handling modules 106 are configured to enable execution of one or more queries against repositories 103. Example techniques for query processing are discussed further below.

In the example of FIG. 1, user interface management modules also provide users with access to third party ticketing systems 120 via ticketing management modules, thereby enabling a user to (for instance) identify one or more desired trips via a reviewing results of query executed by modules 106 in respect of repositories 103, and cause execution of a process whereby modules 105 engage in data exchange with a relevant one or more of ticketing systems 120 thereby to obtain tickets. However, in some example frameworks ticketing management modules 105 are omitted, and system 100 is limited in functionality to providing journey planning information via user interfaces 150, and users engage in a separate ticket procurement process via ticketing systems 120 (external of involvement via system 100).

At a high level, a common overall process flow for a system such as system 100 is as follows:
- Transportation data, such as GTFS data, is obtained and normalised/processed into local data stores in accordance with a predefined protocol.
- Local data is optionally subjected to pre-processing, thereby to improve searchability of local data based on predefined forms of searches.
- Query data is received from a given user terminal via a user interface rendered at that terminal, and the query is executed against local data.
- Query results are returned to the user.
- For each of the query results, one or more scheduled trips are able to be identified in the transportation data.
- The user is enabled to view details for (and in some embodiments procure tickets in respect of) one or more of the identified scheduled trips.

Examples of more specific relevance to inventive technology described herein are provided further below.

### Partition Based Query Processing Simplification

Described herein is technology that makes use of attribute-based trip data partitioning thereby to enable more efficient processing of queries in a transportation network. This seeks to solve technical problems associated with reducing query times in a transportation network, whilst preserving an ability to identify the best results (i.e. improving efficient and effectiveness).

In overview, a physical transportation network is partitioned, for example based on geographical regions (and/or further partitioning schema) as a configurational process. Trips defined in trip data are each assigned one or more attribute markers responsive to that partitioning. At query runtime, a process is performed thereby to determine a set of attribute markers for a given query (which, for examples described herein, is a query including data that defines an origin location and a destination location). A journey construction module is then executed to generate journeys, which represent potential practical real-world journeys from the origin location to the destination location using only trips satisfying the determined set of attribute markers. This reduces the problem space for the query, thereby resulting in delivery of results having high probability of representing optimal journeys in shorter times than available via conventional query processing methodologies, with high processing efficiency.

In preferred embodiments, the technology is implemented via a computer system (such as system 100) including an input module configured to receive transportation data including data representative of:
- A plurality of trips T₁ to Tₙ.
- For each trip, a plurality of transit locations Tᵢ(L₀, L₁, ... Lₙ) ; and
- For each transit location, timing data representative of a scheduled transit event at that transit location during the trip.

For example, this is optionally provided via GTFS data received/obtained via one or more sources. The input module is configured to store the received transportation data in a local searchable repository in accordance with a predefined protocol. As noted above this typically includes some normalisation and processing of the data thereby to enable storing based on the predefined protocol.

For the purposes of an example that is detailed below, partitioning is performed based on geographical regions. For example, a country is segmented into a set of regional sectors, each regional sector having a respective attribute marker (this segmentation may be, for example, arbitrary/subjective, or objective based on inherent geographical attributes). An attribute designation module is configured to assign to each trip one or more attribute markers. In the present example, the attribute markers are assigned to a given trip based upon sectors in which the trip has one or more transit locations. In some embodiments more complex logic is applied thereby to control association of trips to attribute markers.

In some embodiments, the attribute designation module is configured to perform a predefined form of marker association for a set of trips that service a plurality of the geographical partitions (for example trips that, from a practical standpoint, are inter-region trips, part of a national network, or the like). In some cases this is determined based on identification that a given trip includes transit locations in two or more of the partitioned geographic regions. In a further embodiment there is an additional/alternate requirement that the trip be have specific attributes, for example belonging to one of a plurality of defined trip types representative of inter-region trips (for example trips provided by transportation providers that operate inter-region transit, or the like). This facilitates identification of trips that have an "inter-region character"; i.e. they form part of what might be conceptualised as a trunk network shared by all regions for the purposes of inter-region movement. This is readily differentiated from certain local transportation provides, for example local bus services, which are region-specific. In some embodiments the attribute designation model is configured to apply a applying a trunk attribute marker to each trip in that set (and the trunk attribute is set for all queries such that those trips are available in a journey planner search space for all queries). An alternate approach is to apply, to each trip in that set, the attribute marker for every geographical partition (again such that those trips are available in a journey planner search space for all queries).

A search space simplification module provided. The search space simplification module is configured to receive data representative of a journey query, including data defining an origin location, a destination location, and a time window. For example, this may be derived from a journey query defined by a user via a respective terminal that renders a user interface providing a query submission interface. The search space simplification module then determines one or more attribute markers to be applied for the journey query. In the present example, this includes:
- determining a geographical partition to which the origin location belongs;
- identifying an attribute marker defined for the determined geographical partition to which the origin location belongs;
- determining that the attribute marker defined for the determined geographical partition to which the origin location belongs is to be applied to the journey query;
- determining a geographical partition to which the destination location belongs;
- identifying an attribute marker defined for the determined geographical partition to which the destination location belongs; and
- determining that the attribute marker defined for the determined geographical partition to which the destination location belongs is to be applied to the journey query.
- determining that the trunk attribute marker defined is to be applied to the journey query (in the case that trunk attribute markers are used; as noted an alternate approach is to apply all attribute markers to trips that are "trunk" in character).

The search space simplification module then designates a reduced set of trips for the purpose of the query, being trips that include the one or more attribute markers. The precise manner by which "designation" occurs varies between embodiments. For example, in one embodiment the designation includes defining an attribute marker schema that configures a journey construction module (described below) to automatically exclude non-conforming trips, and perform a journey construction process in memory. In another embodiment, designated trips are extracted from a primary database into a separate table for the purpose of journey construction processing.

A journey construction module is configured to construct a plurality of journeys based on a set of journey construction rules. The journey processing module is operated to construct one or more journeys in response to the journey query, using exclusively trips in the reduced set of trips designated by the search space simplification module. That is, in this example, the journey construction rules configure the journey construction module to construct one or more journeys from the origin location to the destination location using only trips having at least one of: the attribute marker defined for the determined geographical partition to which the origin location belongs; the attribute marker defined for the determined geographical partition to which the destination location belongs; and the trunk attribute marker (in embodiments where the trunk attribute marker is used).

The journey construction module constructs the one or more journeys via performing a branching journey construction process that constructs plural branching journeys from each trip that includes the origin location. For example, this may include applying Dijkstra's algorithm or a variation thereof. Those skilled in the art will recognise various journey construction processes that are able to be applied; the use of attribute-based partitioning (for example geographic) and search space simplification is able to enhance operation of a wide range of such journey construction processes.

In some embodiments a journey planning process includes identifying each trip that includes the origin location, and commencing a journey from that trip. At each transit location, a journey branching is performed thereby to transit to new journey branches along each of a plurality of further trips that leave that transit location later than the current trip's arrival. Journey planning continues until one or more predefined conditions are satisfied. Those conditions may include, for example:
- A rule that terminates a journey branch upon reaching a maximum change count;
- A rule that terminates a journey branch transit event falling outside of a defined time window (for example a window defined relative to a journey start time, a query time window, a calendar date, or the like); and
- A rule that terminates journey construction upon identification that a threshold number of completed journeys have been identified.

It will be appreciated that a range of known techniques are optionally applied to provide bounds to the journey construction module, thereby to prevent unlimited continuing construction of journeys.

In one embodiment, the branching journey construction process increments a change count each time the journey splits to a new journey branch by transiting between one trip and another trip at a given transit location. In the case that for a given journey branch the change count exceeds a predefined maximum value, that journey branch is terminated and discarded.

In the case that a given journey branch arrives at the destination location, that journey branch added to a result set. It will be appreciated that, where the maximum change count is defined as N, the result set is made up of journeys that travel from the origin location to the destination location with N or less changes between trips.

The result set is populated with a plurality of journey data sets based on respective journey branches, wherein the journey data sets are configured to be sorted based on one or more attributes. The one or more attributes include any one or more of: journey duration, departure time, arrival time, and change count.

In one example, the branching journey construction process is applied via configuring the journey construction module to:
- identify one or more trips having a transit location at the origin location within the time window;
- for each given trip having a transit location at the origin location within the time window, executing a process including:
   (i) defining a new journey data set commencing at the origin location, the new journey having a change count of zero;
   (ii) defining that trip as a current trip;
   (iii) following the current trip to a next transit location;
   (iv) at the next transit location, identifying one or more trips departing the next transit location following arrival of the current trip based on the journey construction rules;
   (v) for each of the identified one or more trips departing the next transit location following arrival of the current trip based on the journey construction rules, defining a new journey data set having a trip count incremented by one;
   (vi) for each new journey data set, defining its respective identified trip departing the next transit location as the current trip, and repeating (iii) to (v) thereby to iteratively define expanding journey branches;
- in the case that a journey data set reaches a maximum change count without an arrival at the destination location, discard that journey data set;
- in the case that a journey data set includes an arrival at the destination location without reaching the maximum change count, define that journey data set as a candidate query result.

The candidate query results are added to the result set. In some embodiments the result set is filtered based on result redundancy, for example where multiple results have common departure times and arrival times (in which case a single journey having a lowest change count is selected).

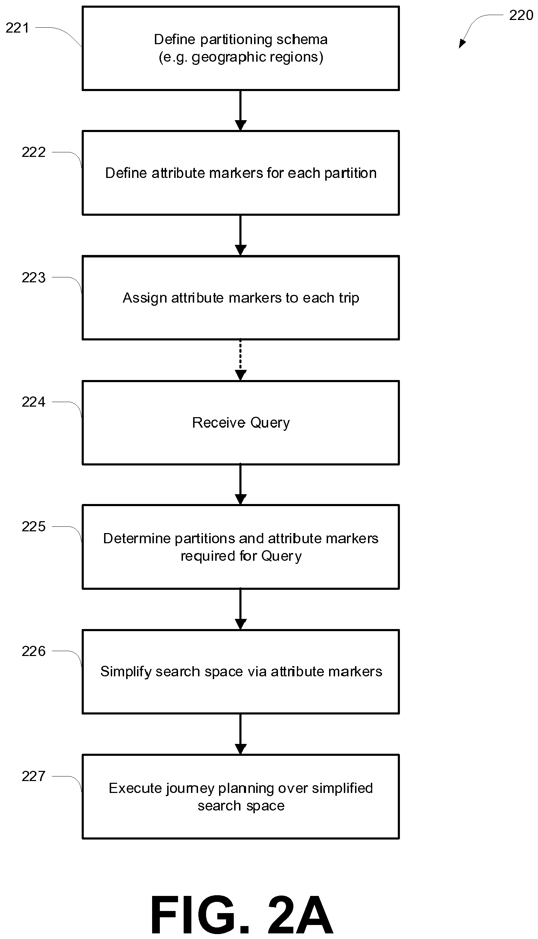

FIG. 2A illustrates a method 220 according to one embodiment. Block 221 represents a process including defining of a partitioning schema, for example a schema whereby a transportation network is split up into geographical regions (and or other partitions, including partitions by transportation vehicle type, fare type, and so on). Attribute markers are then defined for each partition at 222. Block 223 represents operation of an attribute designation module thereby to assign one or more attribute markers to each trip in a trip data set (for example in imported GTFS data or the like). This preferably includes an automated process. For example, an automated process includes a process that searches for defined attributes in trip data, such as presence of a stop known to belong to a particular partition. Each trip found containing that stop is assigned an attribute marker associated with that partition.

Block 224 represents the receipt of a query, for example a query for trips on a given day from an origin to a destination. Block 225 includes performing a process thereby to determine partitions and associated attribute markers that are relevant to that query (for example based on geographic partitions as described further above). Then, at 226, the search space is simplified based on that set of attribute markers. This configures the journey planner to perform a journey planning search over the reduced search space at 227, greatly improving processing speed and efficiency in respect of the received query.

### Line of Route Pre-Processing

In combination with or in addition to embodiments described above which make use of partitioning, other embodiments make use of time-independent line of route pre-processing thereby to enable more efficient processing of queries in a transportation network. This presents another means of solving the same technical problem of improving query processing efficiency and effectiveness in a transportation network.

In overview, the pre-processing is used to generate data representative of physical paths through a transportation network, thereby to identify all (or a significant number of) feasible lines of route through the network. Then, for a query for a trip between an origin location Oᵢ and a destination location Dⱼ; a search is able to be conducted thereby to identify lines of route containing origin location Oᵢ and destination location Dⱼ. This allows for an efficient substantial filtering of trip data that provides transportation options for travel between origin location Oᵢ and a destination location Dⱼ, and those options are able to be assessed using analysis methods. For example, this may include conventional shortest path algorithms, and/or alternate business logic and rules which reveal less optimal (but still reasonable) paths through the network.

In preferred embodiments, line of route pre-processing is performed via a computer system (such as system 100) including an input subsystem configured to receive transportation data including data representative of:
- A plurality of trips T₁ to Tₙ.
- For each trip, a plurality of transit locations Tᵢ(L₀, L₁, ... Lₙ) ; and
- For each transit location, timing data representative of a scheduled transit event at that transit location during the trip.

For example, this is optionally provided via GTFS data received/obtained via one or more sources. The input subsystem is configured to store the received transportation data in a local searchable repository in accordance with a predefined protocol. As noted above this typically includes some normalisation and processing of the data thereby to enable storing based on the predefined protocol.

A data pre-processing system configured to perform pre-processing of the locally stored data. This pre-processing includes performing one or more computer executed methods via execution of computer readable code via one or more microprocessors, as described below. The pre-processing is periodically repeated, for example based on a schedule with which the transportation data is received/updated. For example, this may be daily. In some cases, a subset of transportation data is updated on a more regular basis (for instance in respect of a proximal subset of transportation data for which real-time delays and the like are known), and pre-processing is optionally performed with higher regularity for that subset of transportation data as compared with remaining transportation data.

One phase of line of route pre-processing includes performing time-independent analysis of the transportation data, thereby to define a set of transit location sequence records SR₁ to SRₘ. Each transit location sequence record associated with data representative of a sequence of transit locations derived from either:
(i) A given single one of the trips in the set T₁ to Tₙ;
(ii) A combined trip constructed from a combination of a plurality of the trips in the set T₁ to Tₙ, wherein each transit location sequence records is associated with a respective sequence of transit locations SRⱼ(L₀, L₁, ... Lₙ);

This data is "time independent" in the sense that time data (for example scheduled stop times) are excluded. In some examples, transportation data is defined by reference to a plurality of trips, with each trip including a plurality of stop locations and timing data for each stop location (for example GTFS provides such data). Performing time independent analysis includes identifying a trip in transportation data, and extracting a list (or other data set) of sequential stop locations.

For combined trips constructed from a combination of a plurality of the trips in the set T₁ to Tₙ, a predefined maximum number of combined trips is optionally defined (i.e. a maximum number of transfers between trains/other transportation vehicles), thereby to contain the amount of data for processing (and hence provide meaningful limitations to the search space). For example the maximum number of combined trips is 3 (i.e. two transfers). However, that maximum number is able to be tuned for various data utilisation purposes. In alternate embodiments other forms of filters are used to limit the search space in addition to or in preference to a maximum number of combined trips.

Defining a sequence record for a combined trip is optionally achieved by either of the following approaches.
(i) Combining data at a trip level, for example combining a given trip with a transit location a Lₓ with all other trips having a transit location at Lₓ, such that each defined sequence of transit locations includes transit locations for the given trip up to Lₓ and a respective sequence of transit locations (for the one of the other trips under consideration) after Lₓ.
(ii) Combining defined transit location sequence records without direct reference to trip data, such that a given transit location sequence record including Lₓ is essentially combined with all other sequence records also including Lₓ.

Either of these approaches (and various other approaches) are considered to represent performing time-independent analysis of the transportation data, thereby to define a set of transit location sequence records for a combined trip constructed from a combination of a plurality of the trips in the set T₁ to Tₙ.

A second phase includes performing a matching process thereby to identify a plurality of sets of transit location sequence records having matching sequences of transit locations. Each identified set of transit location sequence records having matching sequences of transit locations is defined as a "trip stop pattern". In a simple example, data is defined for a plurality of scheduled trips along a common route (for example a "northern line express", with scheduled trip departing location L_{y} every 20 minutes and all stopping at the same transit locations), and via time independent analysis these trips are all processed into the same trip stop pattern.

Data representative of the trip stop patterns is then sorted in the searchable repository.

Each trip stop pattern is associated with data representative of a set of trips and/or combined trips on which each of its constituent transit location sequence records are based. For example, each trip stop pattern is associated with unique alphanumeric identifiers for all trips (and/or trip combinations) used to construct the pattern, thereby to subsequently allow searching/identification of those trips, as discussed below.

A core technical problem in the context of information systems that provide access to transportation data is enabling efficient query processing. In that regard, an especially common category of queries is defined by queries including an origin and a destination. Conventionally, processing such a query requires searching through all available data (e.g. GTFS data) thereby to identify trips (and combinations of trips) to identify trips having that include that origin and that destination. Using the pre-processing methodology above, such a query is able to be processed with significantly higher efficiency. In particular, a network constraint analysis query process is performed thereby to identify all trip stop patterns including the origin and the destination. Given that each trip stop pattern is associated with trips (and trip combinations) including the destination and origin, the network constraint analysis query process facilitates efficient identification of all trips (and combinations of trips) that allow transportation from the origin to the destination. Then, a journey planning algorithm is used to identify trips in the identified set that satisfy other query requirements (for example timing parameters, shortest path, including departure and/or arrival time windows), optionally based on known forms of journey planning algorithms. This enables significant processing advantages over conventional approaches of analysing time-scheduled trip data.

In some embodiments, the technology is implemented via a computer system having a query processing subsystem configured to:
- receive a query representative of an origin location Oᵢ and a destination location Dⱼ;
- query the searchable repository thereby to identify one or more trip stop patterns including transit locations corresponding to origin location Oᵢ and destination location Dⱼ;
- identify, for each of the identified one or more trip stop patterns, the associated set of trips and/or combined trips on which each of its constituent transit location sequence records are based; and
- deliver a result set based on at least a subset of the identified set of trips and/or combined trips.

In some embodiments additional pre-processing is performed thereby to achieve upfront indexing of all combinations of origins and destinations, thereby eliminating a need to perform the second stage above. That is, for a query of an origin and destination, indexed data is used to enable direct identification of all trips that travel from that origin to that destination in the pre-processed data derived from trip stop patterns.

Delivering a result set based on at least a subset of the identified set of trips and/or combined trips preferably includes: for each trip and/or combined trip in the subset: identifying one or more trip parameters; sorting and/or filtering the results based on the identified one or more trip parameters; and delivering a result set based on the sorting and/or filtering. The trip parameters optionally include one or more of: timing data for Oᵢ (for example a time period in which Oᵢ is to fall), timing data for Dⱼ (for example a time period in which Dⱼ is to fall), a transit time between origin location Oᵢ and destination location Dⱼ, a fare value associated with transit between origin location Oᵢ and destination location Dⱼ (optionally identifiable by fare data provided in conjunction with and/or extracted from the source transportation data, in some cases being defined in a fare table, and in some cases being determined via fare rules). Other forms of parameters may also be used, for example aesthetic-related rating associated with the trip (which is optionally defined by associating each transit location with an aesthetic rating, and determining combined aesthetic ratings for trip stop patterns). Transfers are also in some embodiments used for sorting/filtering, for instance the number transfers required to complete the combined trip between origin location Oᵢ and destination location Dⱼ and/or transfer duration each transfer.

### Example Methods - Line of Route Pre-Processing

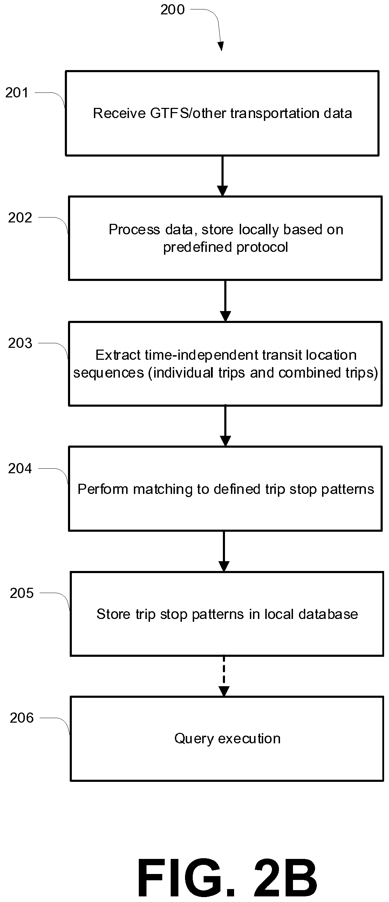

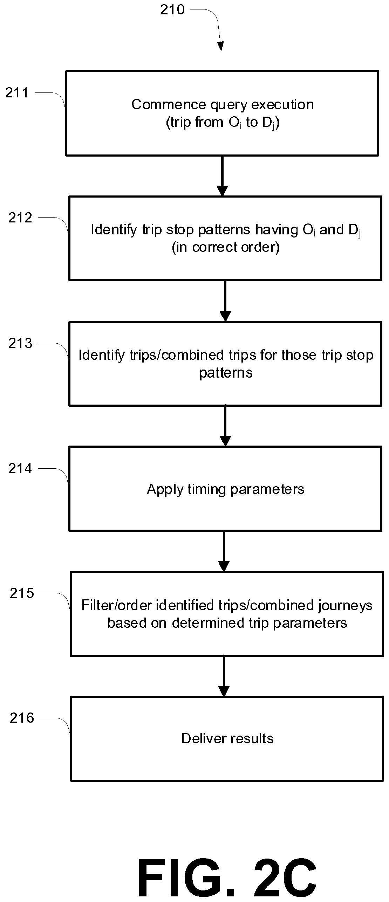

FIG. 2B and FIG. 2C illustrate example computer implemented methods according to embodiments. These are optionally performed by the system of FIG. 1, or by another computer system with access to transportation data and a query processing system. These methods are performed based on execution of computer executable code via microprocessors of one or more computing devices.

Method 200 of FIG. 2B includes, at block 201, receiving GTFS data (and/or other transportation data). This data may be received in either or both of a push and pull manner from an external (e.g. third party) data source. For this example, it is assumed that the transportation data includes data structured a plurality of trips, with each trip having a plurality of transit locations, and scheduled time data for each transit location. The data is processed at block 202 and stored in a local repository. This processing includes, for example, normalisation and data flattening. In some embodiments the step of storing is excluded, with subsequent steps being performed directly on remotely stored data that is available at third part data source locations.

Block 203 represents a process including extracting time-independent location sequences from the stored data. For example, a list (or other data structure) is defined representing transit locations in sequence. This process is performed for combinations of trips, for example by splicing trips (or extracted sequences) together where there are instances of transit location correspondence. This is performed for a predefined number of splits, for example two or three.

Block 204 represents a process whereby matching of sequences is performed, thereby to define trip stop patterns. It will be appreciated that this is performable either or both of: subsequently to processes of block 203; and in conjunction with processes of block 203 (for example each extracted sequence is matched upon extraction). The trip stop patterns are stored at 205, with each trip stop pattern being associated with its underlying trip data (for example a unique identifier for each trip, and identifiers for combined trips, for the underlying sequences that are matched into the pattern). This allows for efficient query execution at 206.

FIG. 2C illustrates an example query execution method 210 for a query including a origin Oᵢ and a destination Dⱼ. The query also, for this example, includes timing parameters for a departure time window between T_{A} and T_{B} (defined in terms of date and time). In other examples alternate forms of timing parameters are present. Query execution commences at block 211.

Block 212 represents a process including querying the trip stop patterns for patterns including Oᵢ and Dⱼ (with Dⱼ later in the sequence that Oᵢ). Block 213 represents a process including identification of trips and combined trips associated with those trip stop patterns. Then, block 214 represents a process by which a query of the trip data (with timing data) is queried thereby to identify, among the subset of data defined by the trips identified at 213, trips that satisfy the timing data. For example, this includes:
- For single trips, identifying all trips where there is a transit at Oᵢ between T_{A} and T_{B}.
- For combined trips: for the trips associated with the portion including Oᵢ, identifying all trips where there is a transit at Oᵢ between T_{A} and T_{B}.; then for each trip identifying a transfer location TL, identifying a transfer time on the trip from Oᵢ at which the transfer occurs, then identifying a trip for the next trip portion having a transit at TL after the transfer time (optionally with a transfer period gap applied). This is repeated through to the portion defined by a trip including Dⱼ.

Then, the identified scheduled trips and combined trips (also referred to as "journeys") are filtered and/or ordered based on parameters such as departure/arrival time, direction, fare value, and so on.

### Conclusions and Interpretation

It will be appreciated that technology described above solves technical problems in the context of managing processing of transportation data, for example in the context of handling queries for trips that include a specified origin and destination in a more efficient and effective manner. This provides increased efficiency in computer processing, and improves the operation of computer systems configured to provide access to transportation data.

Examples discussed above refer to "modules" and "systems". The term "module" refers to a software component that is logically separable (a computer program), or a hardware component. The module of the embodiment refers to not only a module in the computer program but also a module in a hardware configuration. The discussion of the embodiment also serves as the discussion of computer programs for causing the modules to function (including a program that causes a computer to execute each step, a program that causes the computer to function as means, and a program that causes the computer to implement each function), and as the discussion of a system and a method. For convenience of explanation, the phrases "stores information," "causes information to be stored," and other phrases equivalent thereto are used. If the embodiment is a computer program, these phrases are intended to express "causes a memory device to store information" or "controls a memory device to cause the memory device to store information." The modules may correspond to the functions in a one-to-one correspondence. In a software implementation, one module may form one program or multiple modules may form one program. One module may form multiple programs. Multiple modules may be executed by a single computer. A single module may be executed by multiple computers in a distributed environment or a parallel environment. One module may include another module. In the discussion that follows, the term "connection" refers to not only a physical connection but also a logical connection (such as an exchange of data, instructions, and data reference relationship). The term "predetermined" means that something is decided in advance of a process of interest. The term "predetermined" is thus intended to refer to something that is decided in advance of a process of interest in the embodiment. Even after a process in the embodiment has started, the term "predetermined" refers to something that is decided in advance of a process of interest depending on a condition or a status of the embodiment at the present point of time or depending on a condition or status heretofore continuing down to the present point of time. If "predetermined values" are plural, the predetermined values may be different from each other, or two or more of the predetermined values (including all the values) may be equal to each other. A statement that "if A, B is to be performed" is intended to mean "that it is determined whether something is A, and that if something is determined as A, an action B is to be carried out". The statement becomes meaningless if the determination as to whether something is A is not performed.

The term "system" refers to an arrangement where multiple computers, hardware configurations, and devices are interconnected via a communication network (including a one-to-one communication connection). The term "system", and the term "device", also refer to an arrangement that includes a single computer, a hardware configuration, and a device. The system does not include a social system that is a social "arrangement" formulated by humans.

At each process performed by a module, or at one of the processes performed by a module, information as a process target is read from a memory device, the information is then processed, and the process results are written onto the memory device. A description related to the reading of the information from the memory device prior to the process and the writing of the processed information onto the memory device subsequent to the process may be omitted as appropriate. The memory devices may include a hard disk, a random-access memory (RAM), an external storage medium, a memory device connected via a communication network, and a ledger within a CPU (Central Processing Unit).

Unless specifically stated otherwise, as apparent from the following discussions, it is appreciated that throughout the specification discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

The term "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors. Furthermore, a computer-readable carrier medium may form, or be included in a computer program product.

One embodiment of each of the methods described herein is in the form of a computer-readable carrier medium carrying a set of instructions, e.g., a computer program that is for execution on one or more processors, e.g., one or more processors that are part of web server arrangement. Thus, as will be appreciated by those skilled in the art, embodiments of the present invention may be embodied as a method, an apparatus such as a special purpose apparatus, an apparatus such as a data processing system, or a computer-readable carrier medium, e.g., a computer program product. The computer-readable carrier medium carries computer readable code including a set of instructions that when executed on one or more processors cause the processor or processors to implement a method. Accordingly, aspects of the present invention may take the form of a method, an entirely hardware embodiment, an entirely software embodiment or an embodiment combining software and hardware aspects. Furthermore, the present invention may take the form of carrier medium (e.g., a computer program product on a computer-readable storage medium) carrying computer-readable program code embodied in the medium.

It will be understood that the steps of methods discussed are performed in one embodiment by an appropriate processor (or processors) of a processing (i.e., computer) system executing instructions (computer-readable code) stored in storage. It will also be understood that the invention is not limited to any particular implementation or programming technique and that the invention may be implemented using any appropriate techniques for implementing the functionality described herein. The invention is not limited to any particular programming language or operating system.

It should be appreciated that in the above description of exemplary embodiments of the invention, various features of the invention are sometimes grouped together in a single embodiment, FIG., or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

Similarly, it is to be noticed that the term coupled, when used in the claims, should not be interpreted as being limited to direct connections only. The terms "coupled" and "connected," along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Thus, while there has been described what are believed to be the preferred embodiments of the invention, those skilled in the art will recognize that other and further modifications may be made thereto without departing from the spirit of the invention, and it is intended to claim all such changes and modifications as falling within the scope of the invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A computer system configured to enable efficient processing of queries received from a user, the computer system including:
an input module configured to receive transportation data, the transportation data including data representative of:
a plurality of trips T₁ to Tₙ;
for each trip, a plurality of transit locations Tᵢ(L₀, L₁, ... Lₙ) ; and
for each transit location, timing data representative of a scheduled transit event at that transit location during the trip;
an attribute designation module, wherein the attribute designation module is configured to assign to each trip one or more attribute markers;
wherein the input module is configured to store the received transportation data in a local searchable repository in accordance with a predefined protocol;
a search space simplification module that is configured to:
(i) receive data representative of a journey query, including data defining an origin location, a destination location, and a time window;
(ii) determine one or more attribute markers to be applied for the journey query;
(iii) designate a reduced set of trips for the purpose of the query, being trips that include the one or more attribute markers;
a journey construction module that is configured to construct a plurality of journeys based on a set of journey construction rules, wherein the journey processing module is operated to construct one or more journeys in response to the journey query, wherein operating the journey processing module thereby to construct one or more journeys in response to the journey query includes constructing journeys exclusively from trips in the reduced set of trips designated by the search space simplification module.

2. A system according to claim 1 wherein
the plurality of trips relates to a transportation network covering a defined geographical area;
the geographical area is split into a plurality of geographical partitions;
a respective attribute marker is defined for each of the geographical partitions; and
the attribute designation module is configured to assign to each trip one or more attribute markers based on one or more geographical partitions serviced by the trip.

3. A system according to claim 2 wherein determining one or more attribute markers to be applied to the journey query includes:
determining a geographical partition to which the origin location belongs;
identifying an attribute marker defined for the determined geographical partition to which the origin location belongs; and
determining that the attribute marker defined for the determined geographical partition to which the origin location belongs is to be applied to the journey query.

4. A system according to claim 2 or claim 3 wherein determining one or more attribute markers to be applied to the journey query includes:
determining a geographical partition to which the origin location belongs;
identifying an attribute marker defined for the determined geographical partition to which the origin location belongs;
determining that the attribute marker defined for the determined geographical partition to which the origin location belongs is to be applied to the journey query;
determining a geographical partition to which the destination location belongs;
identifying an attribute marker defined for the determined geographical partition to which the destination location belongs; and
determining that the attribute marker defined for the determined geographical partition to which the destination location belongs is to be applied to the journey query.

5. A system according to claim 3 or claim 4 wherein the attribute designation module is configured to apply all geographical attribute markers to a set of trips that service a plurality of the geographical partitions.

6. A system according to claim 3 or claim 4 wherein the attribute designation module is configured to apply a trunk attribute marker to a set of trips that service a plurality of the geographical partitions; and wherein determining one or more attribute markers to be applied to the journey query includes:
determining that the trunk attribute marker defined is to be applied to the journey query.

7. A system according to claim 6 wherein the journey construction rules configure the journey construction module to construct one or more journeys from the origin location to the destination location using only trips having at least one of: the attribute marker defined for the determined geographical partition to which the origin location belongs; the attribute marker defined for the determined geographical partition to which the destination location belongs; and the trunk attribute marker.

8. A system according to any preceding claim wherein the journey construction module constructs the one or more journeys via performing a branching journey construction process that constructs plural branching journeys from each trip that includes the origin.

9. A system according to claim 8 wherein the branching journey construction process includes one or more termination rules, wherein a termination rule causes termination of a journey prior to that journey reaching the destination location, wherein the one or more termination rules include rules based on any one or more of the following:
• A maximum change count;
• A transit event falling outside of a defined time window; and
• Identification that a threshold number of completed journeys have been identified.

10. A system according to claim 8 wherein the journey construction module constructs the one or more journeys via performing a branching journey construction process that constructs plural branching journeys from each trip that includes the origin location.

11. A system according to claim 10 wherein the branching journey construction process increments a change count each time the journey splits to a new journey branch by transiting between one trip and another trip at a given transit location.

12. A system according to claim 11 wherein, in the case that for a given journey branch the change count exceeds a predefined maximum value, that journey branch is terminated and discarded.

13. A system according to claim 7 or claim 8 wherein, in the case that a given journey branch arrives at the destination location, that journey branch added to a result set.

14. A system according to claim 13 wherein the result set is populated with a plurality of journey data sets based on respective journey branches, wherein the journey data sets are configured to be sorted based on one or more attributes, wherein the one or more attributes include any one or more of: journey duration, departure time, arrival time, and change count.

15. A system according to claim any preceding claim wherein the journey construction rules configure the journey construction module to:
identify one or more trips having a transit location at the origin location within the time window;
for each given trip having a transit location at the origin location within the time window,
executing a process including:
(i) defining a new journey data set commencing at the origin location, the new journey having a change count of zero;
(ii) defining that trip as a current trip;
(iii) following the current trip to a next transit location;
(iv) at the next transit location, identifying one or more trips departing the next transit location following arrival of the current trip based on the journey construction rules;
(v) for each of the identified one or more trips departing the next transit location following arrival of the current trip based on the journey construction rules, defining a new journey data set having a trip count incremented by one;
(v) for each new journey data set, defining its respective identified trip departing the next transit location as the current trip, and repeating (iii) to (v) thereby to iteratively define expanding journey branches;
in the case that a journey data set reaches a maximum change count without an arrival at the destination location, discard that journey data set;
in the case that a journey data set includes an arrival at the destination location without reaching the maximum change count, define that journey data set as a candidate query result.
